# EUROPÄISCHE PATENTSCHRIFT

(11) **EP 0 205 095 B1**
(45) Veröffentlichungstag und Bekanntmachung des Hinweises auf die Patenterteilung: **03.02.1993**
(21) Anmeldenummer: 86107620.6
(22) Anmeldetag: 04.06.1986
(51) Int. Cl.: G06F 1/00

(54) **Verfahren und Anordnung zur Sicherung des Zugriffs zu einer Rechenanlage**
Method and arrangement for protecting the access to a computer
Procédé et disposition pour la protection d'accès à un ordinateur

(30) Priorität: 07.06.1985 US 742487
(43) Veröffentlichungstag der Anmeldung: 17.12.1986
(73) Patentinhaber: SIEMENS AKTIENGESELLSCHAFT, 80333 München (DE)
(72) Erfinder: Michener, John R., Dr., Princeton, NJ 08540 (US)

(56) Entgegenhaltungen:
- EP-A- 0 033 833
- WO-A-83/02343
- US-A- 4 310 720
- ELECTRONICS INTERNATIONAL, Band 57, Nr. 5, 8. März 1984, Seiten 131-135, New York, US; J. SMITH: "Call-back schemes ward off unwanted access by telephone"

## Beschreibung

Die Erfindung bezieht sich auf ein Verfahren und eine Anordnung zur Sicherung der Übertragung von Daten zwischen einem entfernt angeordneten Terminal und einer Rechenanlage.

Der unberechtigte Zugriff auf Rechenanlagen und Datenbanken hat sich zu einem immer größeren Problem entwickelt. Dabei hat es sich gezeigt, daß die Verwendung eines einfachen Schlüsselwortes nicht ausreichend ist, da solche Schlüsselworte leicht feststellbar sind und sich nach Aufbrechen der Sicherung sehr schnell zu anderen möglichen unberechtigten Nutzern der Rechenanlage verbreiten. Eine sinnvolle aber in der Anwendung beschränkte Lösung dieses Problems besteht in dem sog. Rückrufverfahren, bei dem ein möglicher Benutzer die Rechenanlage von einem vorgegebenen Ort anruft, sich identifiziert und dann die Verbindung unterbricht. Wenn die vom möglichen Benutzer angegebene Information akzeptierbar ist, dann ruft die Rechenanlage zurück und stellt die Verbindung mit dem Benutzer her. Wenn ein unberechtigter Benutzer versucht, die Rechenanlage von einem vom vorgegebenen Ort verschiedenen Ort zu benutzen, kann der berechtigte Benutzer dies durch den Rückruf durch die Rechenanlage feststellen und kann dann das Schlüsselwort ändern. Dieses Verfahren ist jedoch ungeeignet, wenn mögliche Benutzer nicht von vorgegebenen Orten anrufen können. Deswegen müssen andere Möglichkeiten zur Verfügung gestellt werden, um berechtigten Nutzern von Rechenanlagen einen sicheren Zugriff zu dem System von verschiedenen Orten aus zu ermöglichen.

Die erste Frage, die bei der Betrachtung der Frage des gesicherten Zugriffs zu einer Rechenanlage beantwortet werden muß, ist folgende:
Gegen welche Gefahren muß das System gesichert werden? Dabei muß beachtet werden, daß ein möglicher Mißbrauch der Rechenanlage durch Personen erfolgt, die gute technische Kenntnisse haben, die Zugriff zu Datenverarbeitungsgeräten haben und die fähig sind, Telefonleitungen anzuzapfen.

Es gibt eine Reihe von Lösungsvorschlägen für die Sicherung der Übertragung von Daten zwischen entfernt aufgestellten Terminals und einer Rechenanlage. Als Beispiel wird auf folgende Patente oder Patentanmeldungen hingewiesen:
US-Patent 3 781 473, US-Patent 4 215 421, US-Patent 4 268 715, US-Patent 4 281 215, US-Patent 4 283 599, US-Patent 4 288 659, US-Patent 4 315 101, US-Patent 4 316 055, US-Patent 4 317 957, US-Patent 4 322 576, US-Patent 4 349 695, US-Patent 4 386 266, US-Patent 4 408 202, Europäische Patentanmeldung Nr. 68 805, PCT-Anmeldung Nr. WO83/02343.

Aus diesen Patenten ist es bekannt, das entfernt aufgestellte Terminal oder Modem mit einer festen Identifikationsnummer zur Selbstidentifizierung zu versehen. Es ist weiterhin bekannt, persönliche Schlüsselworte vorzusehen, wie z.B. eine persönliche Identifikationsnummer (PIN), die mit dem Namen des Benutzers gekoppelt ist. Weiterhin ist bekannt, die zu übertragenden Daten zu verschlüsseln und zwar unter Verwendung eines Hauptschlüssels, der für eine verhältnismäßig lange Zeit unverändert bleibt (z.B. für einen Monat). Weiterhin ist es bekannt, jedem entfernt aufgestellten Terminal nach einer Datenübertragung jeweils ein neues Schlüsselwort zuzuordnen.

Die US-Patentschrift 4 386 266 offenbart ein Rechnersicherungssystem, bei dem die persönliche Identifikationsnummer des Terminalbenutzers unter Verwendung eines ersten Schlüsselwortes zu einem ersten Verschlüsselungsergebnis verschlüsselt wird. Dieses erste Verschlüsselungsergebnis wird mit einer von dem Terminal erzeugten Zufallszahl gekettet und dann anschließend die gekettete Zahl unter Verwendung eines zweiten Schlüsselwortes noch einmal verschlüsselt und dadurch eine doppelt verschlüsselte persönliche Identifizierungsnummer erzeugt. Die doppelt verschlüsselte Identifizierungsnummer wird zusammen mit Kontoidentifizierungsdaten zu der Rechenanlage übersandt. Dort wird die doppelt verschlüsselte Zahl unter Verwendung des zweiten Schlüsselwortes entschlüsselt, um das erste Schlüsselergebnis zu erhalten und dann dieses erste Schlüsselergebnis mit der gültigen Zahl und den kontoidentifizierenden Daten verglichen, die in der Rechenanlage gespeichert sind.

Die meisten in den obengenannten Patentschriften offenbarten Systeme sind verhältnismäßig komplex und daher teuer. Weiterhin sind sie anfällig gegenüber Unberechtigten, die die Übertragungsleitung angezapft haben und den Verschlüsselungsalgorithmus gebrochen haben.

Die der Erfindung zugrundeliegende Aufgabe besteht darin, ein Verfahren anzugeben, mit dem die Übertragung von Daten zwischen einem entfernt aufgestellten Terminal und einer Rechenanlage so gesichert werden kann, daß ein unerlaubter Zugriff zu den Daten in der Rechenanlage nicht möglich ist. Weiterhin wird eine Anordnung zur Durchführung dieses Verfahrens angegeben.

Diese Aufgabe wird bei einem Verfahren der eingangs angegebenen Art durch die im Kennzeichen des Patentanspruchs 1 angegebenen Merkmale gelöst.

Die Rückrufnachricht von der Rechenanlage enthält vorzugsweise einen verschlüsselten Befehl, um den internen Schlüsselwortgenerator zu aktivieren. Das nächste folgende Schlüsselwort wird dann ein von dem ersten Schlüsselwort verschiedenes Schlüsselwort sein.

Wenn es gewünscht wird, kann die verschlüsselte dritte Nachricht, die das zweite interne Schlüsselwort enthält, weggelassen werden. In diesem Fall wird das Schlüsselwort, das als nächstes dem ersten Schlüsselwort folgt, gebildet, wenn wieder zu einem späteren Zeitpunkt eine Verbindung hergestellt wird.

In einigen Telefonsystemen ist es einer Rechenanlage möglich, automatisch die Telefonnummer einer örtlichen Telefonleitung festzustellen. Dann ist es nicht notwendig, obwohl es wünschenswert wäre, daß das Terminal seine Telefonnummer übermittelt.

Im folgenden wird der Ausdruck "Rechenanlage" nicht nur für den Rechner selbst verwendet, sondern auch für seine peripheren Einheiten, wie z.B. für eine getrennte zentrale Sicherungseinheit. Diese Sicherungseinheit entlastet den Rechner und verhindert die Möglichkeit der Zerstörung des ganzen Systems durch einen Unberechtigten, der Zugriff zu dem Rechner hat.

Das erfindungsgemäße Verfahren und die erfindungsgemäße Anordnung verwendet ein Rückrufsystem, um Zugriff zu der Rechenanlage zu erhalten, weil ein solches System die Feststellung des Ortes jedes Anrufes und damit der Rechenanlage die Unterhaltung eines akustischen Weges zu jedem Systembenutzer erlaubt. Um das Rückrufsystem zu realisieren, muß ein elektronischer "Schlüssel" geschaffen werden, der einem bestimmten Nutzer der Anlage zugeordnet wird. Aus Prüfzwecken muß dieser Schlüssel seine eigene und einzigartige Identifikation haben und muß Informationen einschliessen, die von dem Nutzer eingegeben werden.

Erfindungsgemäß wird dieser elektronische "Schlüssel" entweder durch eine getrennte Sicherungseinheit erzeugt, die von einem bestimmten Nutzer individualisiert wird oder er wird von einem individualisierten elektronischen Schlüsselmodul erzeugt, das in einer festen Sicherungseinheit oder in einem entfernt aufgestellten Terminal eingefügt ist. Werden sehr hohe Sicherungsanforderungen gestellt, dann könnte die feste Sicherungseinheit persönliche Eigenheiten des Nutzers (Fingerabdruck, Stimme, Handschrift, körperliche Eigenheiten) messen und digitalisieren und diese Information der Rechenanlage zur Überprüfung übersenden. Die Sicherungseinheit muß einen nicht flüchtigen und nicht zugreifbaren Speicher, eine CPU (z.B. einen Mikroprozessor) und ein standardmäßiges Modem enthalten.

Zur Sicherung der Übertragung von Daten zwischen dem entfernt aufgestellten Terminal und der Rechenanlage arbeitet die Sicherungseinheit mit dem Terminal zusammen. Insbesondere hat jede Sicherungseinheit ihre eigene Identifikationsnummer, die gemeldet wird, wenn eine Verbindung zwischen dem Terminal und der Rechenanlage versucht wird. Die Identifikationsnummer kann auf zwei Arten realisiert sein: Entweder kann sie ohne Zerstörung der Sicherungseinheit nicht geändert werden oder sie ist variabel und kann durch einen Befehl der Rechenanlage auf einen bestimmten Wert gesetzt werden. Die zweite Möglichkeit ist dann geeignet, wenn ein möglicher unberechtigter Benutzer keine Information über den Ort der Sicherungseinheit erhalten darf. Eine solche Information kann festgestellt werden durch Anzapfen der Telefonleitungen zu der Rechenanlage und Abhören des Identifikationscodes, der zu der Rechenanlage von den Sicherungseinheiten übertragen wird und danach durch Abhören der Telefonnummern, die die Rechenanlage wählt, um eine Verbindung mit diesen Einheiten herzustellen. Jede Sicherungseinheit wird vorzugsweise einer einzigen Person zugeordnet, nämlich der Person, die zur Benutzung der Sicherungseinheit berechtigt ist. Diese Person sollte eine "persönliche Identifizierungszeichenkette" (z.B.Name, persönliches Kennwort und/oder persönliche Identifikationsnummer (PIN)) eingeben, wenn eine anfängliche Verbindung gewünscht wird. Wenn diese Sicherheitsanforderungen hoch sind, dann wird jeder Person vorzugsweise eine oder mehrere Markierungen in ihrer den Zugriff ermöglichenden Identifikationszeichenkette zugeordnet. Wenn eine Markierung aktiviert wird, dann bemerkt die Rechenanlage, die diese Markierung erhält, daß die Sicherungseinheit und/oder ihre Benutzer von einem Unberechtigten gefährdet worden ist. Die Rechenanlage kann dann Schutzmaßnahmen ergreifen (z.B. nur den Zugriff zu einer Leerdatei erlauben oder die Telefonnummer aufspüren und geeignete Behörden benachrichtigen). Mit jedem erfolgreichen Zugriff zu der Rechenanlage verändert die Sicherungseinheit ihr automatisch erzeugtes internes Kennwort. Auf diese Weise ist das Kennwort für jeden Anruf/Rückruf verschieden. Da es erforderlich ist, daß die Rechenanlage das interne Kennwort jeder Sicherungseinheit kennt, können diese Kennworte nicht automatisch als Zufallszahlen erzeugt werden. Der Kennwortgenerator innerhalb der Sicherungseinheit sollte darum ein voraussagbares Kennwort immer dann erzeugen, wenn es verändert wird und sollte so ausgeführt sein, daß er gegen Angriffe auf seinen internen Zustand unempfindlich ist. Eine solche Schaltung kann z.B. eine verdrahtete Speichereinheit (ROM) oder ein nichtlineares Schieberegister, das eine geeignete Rückkopplungsschleife zur Änderung ihres Inhalts hat, sein.

Die Verwendung von sich fortwährend ändernden, automatisch erzeugten internen Kennworten macht das System sicher gegen wiederholte Angriffe, da die Verwendung eines vorher erfolgreichen Systemzugriffcodes nicht den Zugriff zu der Rechenanlage ermöglichen wird. Die Rechenanlage kann auch die Sicherungseinheit regelmäßig abfragen -z.B. alle 60 Sekunden- und damit die Sicherungseinheit veranlassen, ihr internes Kennwort zu verändern und zu übertragen. Die routinemäßige Bestätigung des internen Kennwortes macht das System sicher gegen einen Unberechtigten, der eine einmal von einem berechtigten Benutzer aufgebaute Verbindung übernimmt. Die standardmäßige Bestätigungsroutine kann innerhalb der Sicherungseinheit ohne Eingriff oder Kenntnis des rechtmäßigen Benutzers durchgeführt werden.

Schließlich kann die Rechenanlage, wenn der Benutzer den Benutzerstatus innerhalb der Rechenanlage zu ändern versucht oder verbotene Operationen auszuführen versucht, eine erneute Startidentifizierung verlangen oder den Benutzer als gefährdet markieren und den Benutzer zwingen, die Verbindung über andere Kanäle wieder aufzunehmen.

In Abhängigkeit des für die Verschlüsselung der übertragenen Daten verwendeten Systems, kann die regelmäßige Veränderung des internen Kennwortes nicht erforderlich sein. Dies ist der Fall, wenn der Schlüssel für die Verschlüsselung ständig geändert wird, da dann dem Unberechtigten der verwendete Schlüssel nicht zur Verfügung steht.

Die Sicherungseinheit umfaßt eine Verschlüsselungseinheit, die Nachrichten nach einem sog. "bit complete" blockkryptographischen Algorithmus verschlüsseln kann. Das zu verschlüsselnde Material besteht aus den benutzerspezifischen, persönlichen Identifikationszeichenketten (Name des Benutzers und vom Benutzer angegebene Kennworte), dem internen, automatisch erzeugten Kennwort der Sicherungseinheit und der Telefonnummer, von der aus der Benutzer anruft. Wenn eine feste Sicherungseinheit verwendet wird, um die Sicherheit zu erhöhen, sollte die Benutzerinformation, die durch die Einheit festgelegt wird, z.B. Fingerabdruck, Stimme, Handschrift oder sonstige persönliche Eigenschaften des Benutzers, in der Information enthalten sein, die in dem Block verschlüsselt wird. Wenn das Material, das zu der Rechenanlage übersandt wird, nicht den gesamten Block ausfüllt, sollte Zufallsinformation hinzugemischt werden.

Um Zugriff zu der Rechenanlage zu gewinnen, muß somit der Benutzer zuerst in das entfernt aufgestellte Terminal die geeignete Zeichenkette (persönliche Identifikationszeichenkette) und die Telefonnummer des Apparates, von dem angerufen wird, eingeben. Die Sicherungseinheit, die mit dem Terminal verbunden ist, baut den Kontakt mit der Rechenanlage auf und gibt ihre eigene Identifikationsnummer an, gefolgt von der verschlüsselten Kombination ihres internen automatisch erzeugten Kennwortes, der persönlichen Identifikationszeichenkette des Benutzers und der Telefonnummer (plus gemessene Benutzereigenschaften, soweit diese verwendet werden). Die Sicherungseinheit unterbricht dann den Kontakt und wartet auf einen Rückruf.

Die Rechenanlage, die die Identifikationsnummer der Sicherungseinheit erhalten hat, entschlüsselt den Datenblock und vergleicht die entschlüsselte Information mit den richtigen Werten. Wenn die empfangene Information akzeptierbar ist, wählt sie die in der verschlüsselten Nachricht enthaltene Telefonnummer zurück und befiehlt der Sicherungseinheit ihren internen Zustand zu ändern und erlaubt die weitere Übertragung. Wenn variable Identifikationsnummern verwendet werden, überträgt die Rechenanlage die Identifikationsnummer, die für den nächsten Zugriff zu der Rechenanlage verwendet werden muß.

Die Datenübertragung von der Rechenanlage zur Sicherungseinheit erfolgt verschlüsselt, um Unberechtigte daran zu hindern, die neue Identifikationsnummer, wenn sie sich ändert, festzustellen und um Unberechtigte daran zu hindern, die Sicherungseinheit anzurufen und zur Änderung ihres Zustandes zu veranlassen, um so die Synchronisation zwischen der Rechenanlage und der Sicherungseinheit zu stören.

Obwohl das erfindungsgemäße Verfahren und die erfindungsgemäße Anordnung keine zusätzlichen Aufwendungen auf der Seite des Benutzers gegenüber bekannten Systemen erfordert, wird bei der Erfindung eine Kennwortinformation erzeugt, die mit jedem Zugriff sich ändert. Die Rechenanlage kann deshalb einen Speicher unterhalten, in dem enthalten ist, von wo ein Anruf gekommen ist, welcher Benutzer zu welcher Zeit einen Zugriff wünschte. Die Verschlüsselung der Startinformation hindert Unberechtigte daran, die besondere Telefonnummer zu ändern und Zugriff zu dem internen automatisch erzeugten Kennwort und der Benutzerinformation zu erhalten. Wenn das Prinzip der Bestätigung benutzt wird, dann wird das interne automatisch erzeugte Kennwort vorzugsweise vor der Übertragung verschlüsselt, um einen Leitungsanzapfer daran zu hindern, auf einfache Weise den früheren Zustand des internen Kennwortgenerators festzustellen.

Die Sicherungseinheit der eben beschriebenen Art verschlüsselt Datenübertragungen zu und entschlüsselt Datenübertragungen von der Rechenanlage. Da der verwendete Schlüssel gleich oder abhängig von dem internen, automatisch erzeugten Kennwort gemacht wird, ändert sich der Schlüssel mit jeder zu übertragenden Nachricht, kann jedoch einfach durch die lokale Sicherungseinheit und durch die Rechenanlage festgestellt werden. Wenn die Nachrichtenströme durch Geräusche gestört werden oder absichtlich auf den Leitungen geändert werden, kann eine Bestätigung des Benutzerstatus -verändern des internen Kennwortes- den Schlüssel wieder neu setzen und die Sicherungseinheit erneut mit der Rechenanlage synchronisieren.

Wenn das Standardverschlüsselungsverfahren, wie es z.B. das data encryption standard (DES) System darstellt, verwendet werden soll, kann die Sicherheit durch Benutzung der "Dublex" Verarbeitung vergrößert werden. In diesem Fall wird ein DES Schaltkreis (der als Chip erhältlich ist) im Rückkopplungsmodus betrieben, bei dem Ausgangsdatenblöcke als Schlüsselworte für einen anderen DES Schaltkreis verwendet werden, der zur Blockverarbeitung des Textes mit dem ersten DES Schaltkreis verbunden ist. Diese Anordnung kann durch Schieberegister oder durch einen weiteren DES Schaltkreis, die den Schlüssel der Schlüsselerzeugungseinheit modulieren, weitergebildet werden.

Duplexverarbeitung kann mit jedem Blockcode verwendet werden und ergibt sich ständig verändernde Verschlüsselungsworte innerhalb jeder gegebenen Textzeichenkette. Ein Angriff, bei dem der Wert eines bestimmten Schlüsselwortes festgestellt wird, ergibt lediglich den Schlüssel, der für eine Verschlüsselung eines einzigen Blockes verwendet wird. Die Analyse des Quellenschlüssels ist sehr viel schwieriger. Der Quellenschlüssel wäre eine Funktion des internen, automatisch geänderten Kennwortes, das ein System ergibt, das niemals einen identischen Schlüssel für eine Nachricht verwendet. Wenn den Benutzern des Systems nicht die ganze Sicherungseinheit für die Verbindung mit dem entfernt aufgestellten Terminal gegeben wird, müßte ihnen mehr als der Speicher, der alle Codes und Statusinformationen enthält, gegeben werden. Wenn feste Sicherungseinheiten verwendet werden, wobei der Benutzer den Speicherblock, der alle Codes und Statusinformationen enthält, einfügt, könnte ein Angreifer die festen Sicherungseinheiten so ändern, daß er die internen Zustände und die Benutzerzugriffscodes lesen kann. Dann hätte der Angreifer freien Zugriff zu dem System.

Wenn der Speicher und die Sicherungsprozessoren zusammen in einer abgeschirmten Einheit mit einer begrenzten Zahl von Kontakten angeordnet werden, wären die internen Zustände dieser Einheit von einem Unberechtigten geschützt. Da mehrere Benutzer Zugriff zu Rechenanlagen fordern, müssen die Sicherungseinheiten klein und leicht transportierbar sein. Glücklicherweise sind die cryptographischen Funktionen und Zugriffsfunktionen einfach und leicht in Hardware zu realisieren.

Es ist möglich, einen Zählschaltkreis in die Sicherungseinheit einzubauen, der die Zugriffszeit festlegt, die einem Benutzer zusteht. Die Rechenanlage kann den Benutzer regelmäßig abfragen -z.B. alle 60 Sekunden- und veranlassen, daß die Sicherungseinheit ihr laufendes, internes, automatisch erzeugtes Kennwort liefert und den Zugriffszeitzähler herunterzählt. Der Zugriffszeitzähler kann Teil des Bestätigungsschieberegisters sein, um Verfälschung zu vermeiden. Wenn nur eine relativ kleine Zahl von Zugriffen benötigt werden und erlaubt sind, könnte eine gespeicherte Liste der internen Kennworte benutzt werden, anstatt eines nicht linearen Schieberegisters. Wenn die Kennworte einmal benutzt worden sind, dann hätte der Benutzer keinen Zugriff mehr zu der Rechenanlage und müßte die Sicherungseinheit zum Rücksetzen veranlassen und mit einer neuen Liste von internen Kennworten versorgen.

In einer bevorzugten Ausführung der Sicherungseinheit enthält diese eine CPU, die den Datenfluß zwischen dem entfernt aufgestellten Terminal und dem Modem, das mit der Telefonleitung verbunden ist, koordiniert. Die CPU enthält einen Zufallszugriffsspeicher (RAM), einen Festspeicher (ROM), einen internen Kennwortgenerator und ein Verschlüsselungsmodul.

Als Verschlüsselungsmodul kann z.B. ein allgemeines Rotorsystem oder ein DES Schaltkreis verwendet werden.

Die Rechenanlage ist über ihr eigenes Modem mit dem Modem der Sicherungseinheit verbunden. Die Rechenanlage arbeitet mit Software, das an die Erfordernisse der Sicherunseinheit angepaßt ist. Sie muß einen nicht flüchtigen aber veränderbaren Speicher enthalten, um die den Benutzern zugeordneten Informationen (interne Statuszustände, persönliche Identifikationszeichenketten und Benutzereigenschaften, sofern diese von der Sicherungseinheit gemessen werden) zu speichern, auf die über die Sicherungseinheit-Identifikationsnummer zugegriffen werden kann. Sie muß zusätzlich eine Anzahl von Sicherungsprozessoren enthalten: einen für jede Telefonleitung, um diese in paralleler Betriebsweise bedienen zu können. Wenn ein verallgemeinertes Rotorsystem verwendet wird, um den Text zu verschlüsseln, können die Rotorinhalte für alle Benutzer des Systems gemeinsam sein oder für einzelne Gruppen von Benutzern.

Wenn eine Rechenanlage von einer Sicherungseinheit angewählt wird, dann erhält sie die Identifikationsnummer im Klartext, gefolgt von der Information, die von dem Benutzer und der Sicherungseinheit geliefert wird. Wenn einmal die Identifikationsnummer übergeben worden ist, dann holt sich die Rechenanlage die geeignete Information aus ihrem Speicher, entschlüsselt den verschlüsselten Datenblock und vergleicht die empfangene Information mit ihrer gespeicherten Information. Wenn die gelieferte Information akzeptierbar ist, ruft die Rechenanlage den Benutzer an und übergibt ihm eine verschlüsselte Nachricht, die den Zugriff zu der Anlage erlaubt und fordert die Sicherungseinheit auf, ihren internen Zustand zu ändern. Wenn veränderbare Identifikationsnummern für die Sicherungseinheiten verwendet werden, hält die Rechenanlage eine Liste der verfügbaren Identifikationsnummern und liefert eine neue Nummer an die Sicherungseinheit für den nächsten Zugriff. In diesem Fall ist diese Nummer in einem verschlüsselten Block enthalten, der der Sicherungseinheit übersandt wird. Die vorher verwendete Identifikationsnummer wird in eine Liste von Identifikationsnummern aufgenommen, die für spätere Benutzungen verwendbar sind.

Andere Weiterbildungen der Erfindung ergeben sich aus den Unteransprüchen.

Anhand der Ausführungsbeispiele, die in den Figuren dargestellt sind, wird die Erfindung weiter erläutert.

Es zeigen
- Fig. 1: ein Blockschaltbild, das die Umgebung der Sicherungseinheit zeigt,
- Fig. 2: eine repräsentative Darstellung der durch die Sicherungseinheit übertragenen Nachrichten für den Zugriff zu der Rechenanlage,
- Fig. 3: ein Blockschaltbild der Sicherungseinheit,
- Fig. 4: ein Blockschaltbild für die automatische Erzeugung interner Kennworte innerhalb einer Sicherungseinheit,
- Fig. 5: ein Blockschaltbild für eine andere Art und Weise der automatischen Erzeugung der internen Kennworte in der Sicherungseinheit,
- Fig. 6: ein Blockschaltbild eines cryptographischen Moduls, das in der Sicherungseinheit verwendet werden kann,
- Fig. 7: ein Blockschaltbild für ein zweites cryptographisches Modul zur Verwendung in der Sicherungseinheit,
- Fig. 8a und 8b: Blockschaltbilder, die die aufeinanderfolgenden Arbeitsstufen einer schlüsselerzeugenden Einheit in einem cryptographischen Modul darstellen
- Fig. 9: ein Blockschaltbild eines dritten cryptographischen Moduls für die Sicherungseinheit.

Identische Elemente in den verschiedenen Figuren werden mit demselben Bezugszeichen bezeichnet.

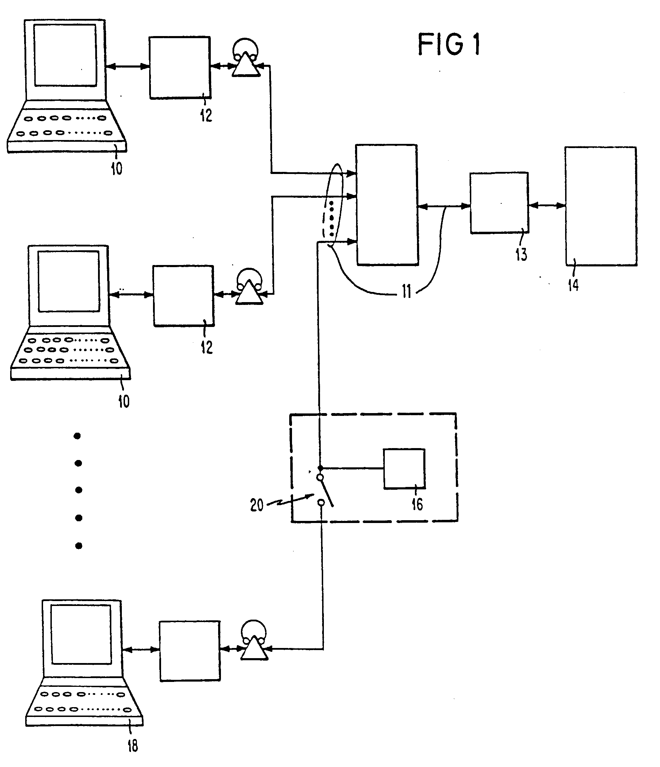

Fig. 1 zeigt das Netzwerk in der Umgebung der Sicherungseinheiten. In diesem Netzwerk sind eine Anzahl von entfernt aufgestellten Terminals 10 enthalten, die über transportierbare Sicherungseinheiten und Modems 12 verfügen, die über Telefonleitungen 11 und ein Modem 13 mit einer Rechenanlage 14 verbunden sind. Die Rechenanlage 14 enthält eine große Datenbank. Berechtigte Nutzer der Terminals können von der Datenbank Informationen abrufen und können sogar die Änderung der Informationen in der Datenbank veranlassen.

Zum Beispiel kann die Datenbank die Konten einer großen Anzahl von Kontoinhabern bei einer Bank enthalten. Die Benutzer der Terminals 10 können Kontoinformationen erhalten und Überweisungen von einem Konto zum anderen ausführen.

Selbstverständlich wäre es für einen Unberechtigten sehr vorteilhaft, wenn er Zugriff zu den gespeicherten Informationen hätte und Transaktionen in der Rechenanlage bewirken könnte. Es wird angenommen, daß der Angreifer fähig ist, eine Telefonleitung mit seinem eigenen Computerterminal 16 anzuzapfen, daß er sogar fähig ist, die Verbindung zu einem Terminal 18 mit Hilfe eines Schalters 20 zugunsten seines eigenen Terminals zu unterbrechen.

Ein weiterer Wunsch des Angreifers kann darin liegen, Zugriff zu dem Terminal 18 und zu der zugeordneten Sicherungseinheit zu erlangen. Jedoch vergrößert dieser Mißbrauch der Ausstattung die Gefahr der Entdeckung des Unberechtigten.

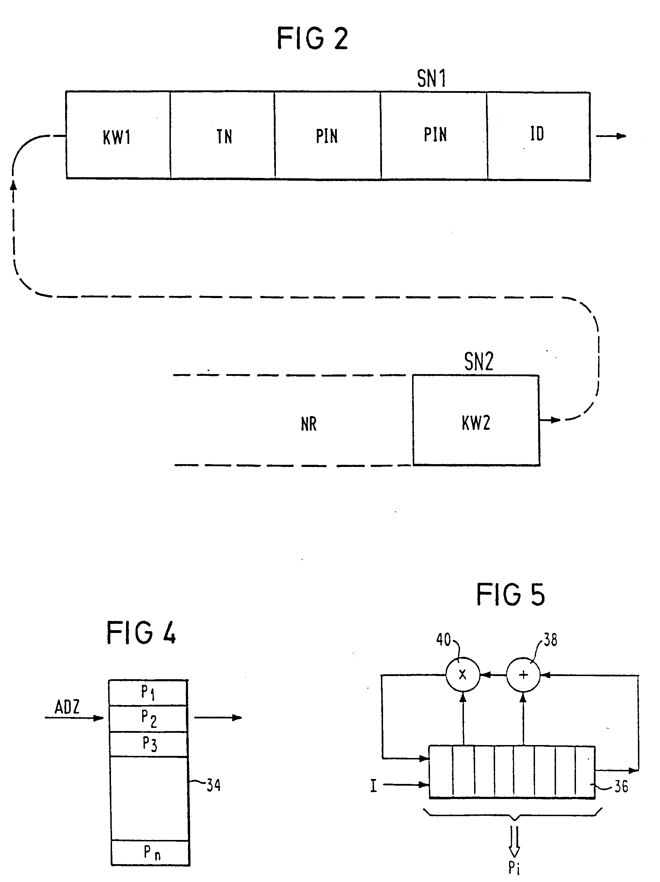

Wenn ein Berechtigter eines Terminals 10 und der Sicherungseinheit 12 die Rechenanlage anrufen will, dann geht er folgendermaßen vor:
1. Es wird die Telefonnummer der Rechenanlage von einem entfernten Telefon, z.B. in einem Büro, Hotel oder der Wohnung des Benutzers gewählt. Die Rechenanlage muß im voraus nicht die Nummer des Telefons wissen, das für den Anruf verwendet wird.
2. Die Sicherungseinheit 12 überträgt eine erste Startnachricht SN1, die nach Fig. 2 zumindest die folgende Information enthält:
   a) die Identifikationsnummer ID der Sicherungseinheit;
   b) die persönliche Identifikationszeichenkette des Benutzers (der Name des Benutzers, sein Kennwort und eine persönliche Identifikationsnummer (PIN));
   c) die Teilnehmernummer TN des Telefons von der der Nutzer anruft;
   d) ein erstes internes Kennwort KW1, das automatisch von der Sicherungseinheit erzeugt wird.

Der Benutzer muß die Information entsprechend den Punkten b) und c) angeben. Das interne Kennwort (Information d)) wird in die Nachricht eingefügt und automatisch übertragen. Der Terminalnutzer hat keine Kenntnis dieses Kennwortes.

Die Identifikationsnummer ID in der ersten Nachricht SN1 wird in Klartext übertragen. Alle übrigen Informationen werden dagegen verschlüsselt unter Verwendung eines möglichst sicheren Verschlüsselungsalgorithmus. Vorteilhafterweise kann das interne Kennwort dazu verwendet werden, um den Schlüssel zu erzeugen.

Nach der Übertragung der Startinformation beendet der Benutzer des Terminals 10 den Telefonanruf (z.B. durch Einhängen). Danach entschlüsselt die Rechenanlage 14 die verschlüsselte Information in der Startinformation und überprüft die Gültigkeit der persönlichen Informationszeichenkette des Benutzers und des intern erzeugten Kennwortes. Insbesondere das interne Kennwort muß dem Kennwort entsprechen, das der Sicherungseinheit zugeordnet ist, also der Identifikationsnummer der Einheit.

Wenn diese Information in der Startnachricht überprüft worden ist, beantwortet die Rechenanlage den Anruf des Benutzers unter Verwendung der Telefonnummer, die in der Startinformation enthalten war. Auf diesen Rückruf antwortet die Sicherungseinheit und kann mit einer Quittung beginnen; z.B. durch Übersendung einer zweiten Startinformation SN2 mit einem zweiten internen, automatisch erzeugten Kennwort KW2. Nach Erhalt überprüft die Rechenanlage die Gültigkeit dieses zweiten Kennwortes. Ist es richtig, dann gewährt die Rechenanlage Zugriff zur Datenbank und der Austausch von Nachrichten NR kann beginnen.

Das zweite interne Kennwort und die nachfolgenden Nachrichten, die zwischen dem Terminal und der Rechenanlage übertragen werden, sind verschlüsselt.

Zur Erhöhung der Sicherheit kann eine Folge von internen, automatisch erzeugten Kennworten dem Zugriff zur Rechenanlage vorausgehen. Selbst wenn ein Berechtigter fähig wäre, die verschlüsselte Information in der ersten Startinformation zu entschlüsseln, rann könnte er trotzdem nicht das zweite interne Kennwort voraussagen und wäre deshalb unfähig, Zugriff zu der Rechenanlage durch Anzapfen der Telefonleitung zu gewinnen.

Um das System zu mißbrauchen, müßte ein Unberechtigter zwei Dinge tun:
1. Er müßte die persönliche Identifikationszeichenkette (Name, PIN und/oder Kennwort) des berechtigten Benutzers herausfinden (entweder durch Entschlüsseln einer ersten Startinformation oder durch Erpressen dieser Information vom berechtigten Benutzer); und
2. Zugriff zu der Sicherungseinheit gewinnen.

Insbesondere würde ein Unberechtigter keinen Zugriff zur Rechenanlage erhalten, wenn er die persönliche Identifikationszeichenkette (PIS) des Berechtigten ohne Nutzung der zugeordneten Sicherungseinheit herausfinden würde oder durch Benutzen der Sicherungseinheit ohne Kenntnis der entsprechenden PIS des berechtigten Benutzers. Zur Erhöhung der Sicherheit sind in die persönliche Identifikationszeichenkette Markierungen einfügbar, die gesetzt werden, wenn ein Berechtigter gezwungen wird, die PIS einem Unberechtigten zu offenbaren. Diese Markierungen -wenn sie gesetzt sind- alarmieren die Rechenanlage.

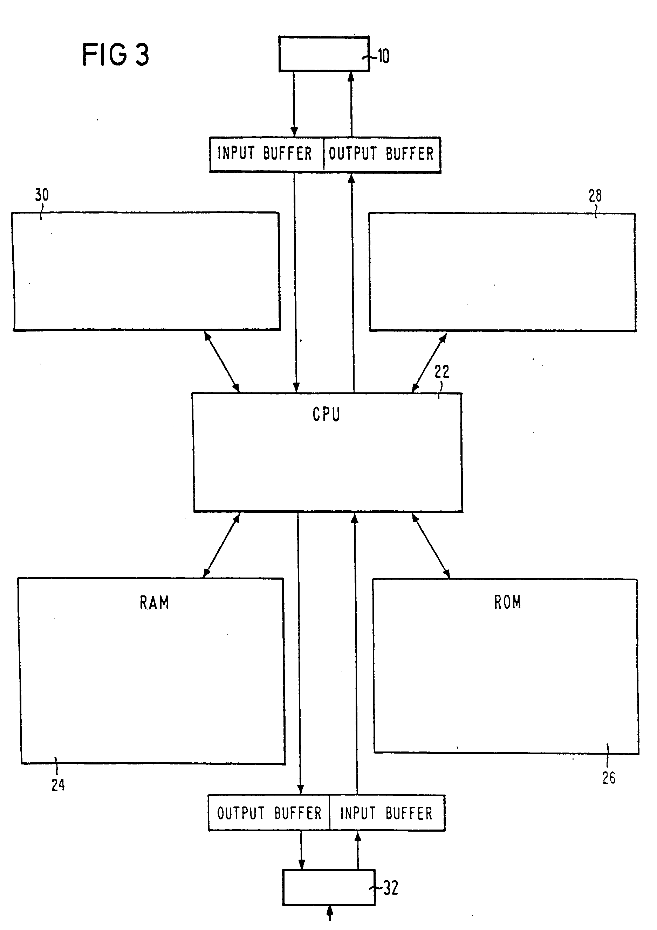

Fig. 3 zeigt eine Ausführungsform der Sicherungseinheit und des Modems 12. Die Einheit enthält einen Prozessor (CPU) 22; einen Zufallszugriffsspeicher (RAM) 24; einen Festspeicher (ROM) 26; einen Kennwortgenerator 28 und ein cryptographisches Modul 30. Die CPU 22 baut die Verbindung mit der Rechenanlage über das Modem 32 auf und steuert den Datenfluß zwischen der Rechenanlage und dem Terminal 10. Eingangs- und Ausgangspufferspeicher sind vorgesehen, um Daten, die durch die Sicherungseinheit laufen, zwischenzuspeichern.

Die CPU 22 arbeitet nach einem Programm, das in dem ROM gespeichert ist. Dieses Programm führt einen Algorithmus aus, um folgende Aufgaben zu erfüllen:
1. Auf eine Anforderung auf Datenübertragung vom Terminal 10 holt sich die CPU die Telefonnummer der Rechenanlage, mit der Kontakt aufgenommen werden soll, die persönliche Identifikationszeichenkette des Benutzers (die von dem Benutzer eingegeben werden muß) und die örtliche Telefonnummer (wenn diese Nummer nicht ständig in dem RAM 24 oder ROM 26 gespeichert ist).
2. Die CPU fordert das laufende interne Kennwort von dem automatisch arbeitenden Kennwortgenerator 28 an.
3. Die CPU übergibt das interne Kennwort (oder ein transformiertes Produkt dieses Kennwortes) dem cryptographischen Modul 30, das dieses als Startschlüssel verwendet.
4. Die CPU sendet die persönliche Identifikationszeichenkette, die Telefonnummer und das intern erzeugte Kennwort zu dem cryptographischen Modul 30 zur Verschlüsselung.
5. Die CPU holt sich die Identifikationsnummer der Sicherungseinheit von dem RAM 24, wenn diese Nummer veränderbar ist oder von dem ROM 26, wenn diese Nummer fest ist.
6. Die CPU sendet die Identifikationsnummer im Klartext gefolgt von der verschlüsselten persönlichen Identifikationszeichenkette, Telefonnummer und internem Kennwort zur Rechenanlage über das Modem 32.
7. Wenn ein Rückruf von der Rechenanlage eingeht, gibt die CPU verschlüsselte Daten, die von der Rechenanlage übersandt worden sind, zum cryptographischen Modul 30 zur Entschlüsselung. Die CPU antwortet in geeigneter Weise auf die entschlüsselten Daten, z.B. durch deren Übertragung zum Terminal 10.
8. Auf Befehl von der Rechenanlage erhöht die CPU den internen Kennwortgenerator 28, um das nächste Kennwort zu erzeugen. Wenn variable Identifikationsnummern in der Sicherungseinheit verwendet werden, ändert die CPU die Identifikationsnummer in eine Art und Weise, die von der Rechenanlage angegeben wird. Die CPU sendet dann eine Quittung zur Rechenanlage, die ein zweites internes Kennwort enthalten kann.
9. Die CPU veranlaßt das cryptographische Modul 30, zur Verschlüsselung der Daten, die sie von dem Terminal 10 erhalten hat und überträgt diese verschlüsselten Daten zum Modem 32 für die Übertragung zur Rechenanlage.
10. Die CPU erhält verschlüsselte Daten vom Modem 32, läßt diese Daten durch das cryptographische Modul 30 entschlüsseln und überträgt die entschlüsselten Daten zum Terminal 10.

Die CPU 22 führt also nur routinemäßige Datenverarbeitungsfunktionen durch. Die Software für den Betrieb der CPU ist dementsprechend verhältnismäßig kurz und einfach, so daß ein durchschnittlicher Programmierer diese Software ohne Schwierigkeiten schreiben kann.

Die Hardware, die in Fig. 3 gezeigt ist, besteht aus üblichen Komponenten mit Ausnahme des Kennwortgenerators 28 und des cryptographischen Moduls 30. Deswegen bedürfen diese zwei Elemente einer weiteren Erklärung.

Der interne, automatische Kennwortgenerator 28 ist grundsätzlich ein Pseudozufallszahlengenerator, der, wenn er erhöht wird, die nächste Zahl (Kennwort) in der Folge erzeugt. Die Pseudozufallszahlenkette ist selbstverständlich im voraus der Rechenanlage bekannt, so daß die Rechenanlage, wenn ihr der laufende Wert der Zeichenkette gegeben wird, im voraus das nächste Schlüsselwort bekannt ist.

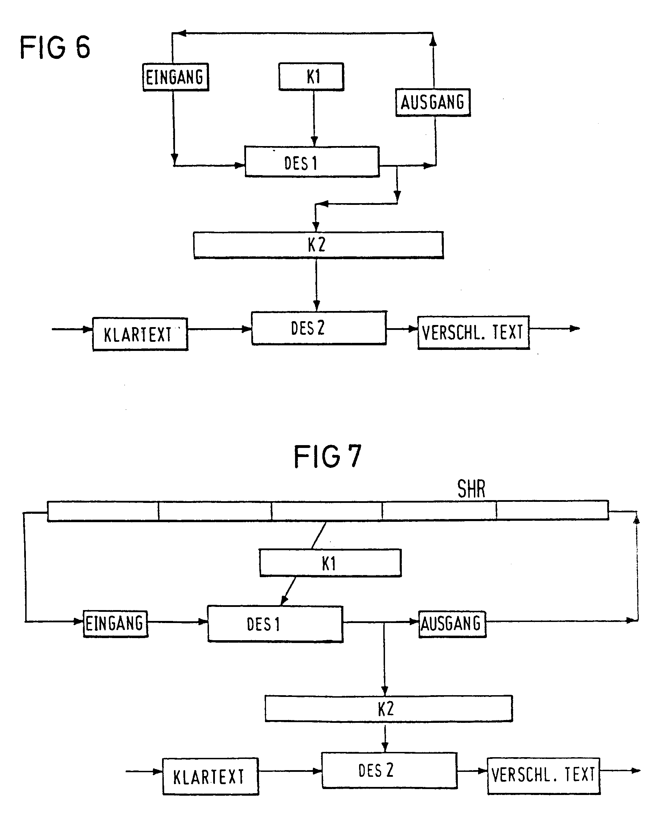

Obwohl jede Ausführung eines Pseudozufallszahlengenerators für den internen Kennwortgenerator 28 geeignet wäre, werden in Fig. 4 und 5 zwei Beispiele für den Generator gezeigt. Der interne Zustand des Kennwortgenerators sollte gegen Analyse widerstandsfähig sein und eine lange Serie von Kennworten enthalten. Fig. 4 zeigt einen Speicher (z.B. einen ROM) oder einen Stapelspeicher 34, in dem eine Liste von Kennworten P1, P2, P3 bis Pn gespeichert ist. Diese Kennworte können in dem Speicher 34 ständig gespeichert sein oder sie können auf Anforderung durch die Rechenanlage geliefert werden. Die Kennworte P1, P2, P3 usw. werden aufeinander mit Hilfe eines Adressenzeigers ADZ ausgelesen, der durch einen Befehl von der CPU 22 weitergeschaltet wird.

Schieberegister, die eine Addition oder eine EXKLUSIV- ODER Verknüpfung ausführen können, sind gut für die Erzeugung von Pseudozufallszahlen-Zeichenketten geeignet. Eine solche Schaltung ist in Fig. 5 dargestellt. Wie zu sehen ist, wird ein 8 bit Schieberegister 36 verwendet, um ein 8 bit Kennwort PI zu erzeugen. Dieses Register wird mit Hilfe eines Impulses am Eingang "I" von der CPU 22 weitergeschaltet. Nach der Weiterschaltung werden Bits zu einem Addierer 38 oder einer EXKLUSIV- ODER Schaltung 40 weitergeleitet, die ein neues Bit zum Eingang des Schieberegisters liefert.

Der Schaltkreis der Fig.5 ist lediglich beispielhaft für eine KLasse von Pseudozufallszahlengeneratoren, die durch Schieberegister realisiert werden. Obwohl dieses Beispiel realisiert ist auf der Grundlage der Basis 2, kann dasselbe Verfahren für Pseudozufallszahlengeneratoren mit einer größeren Basis (2ⁿ) des Typs verwendet werden, der durch D.E. Knuth: The Art of Computer Programming, Vol. 1, 2nd Ed., Chapter 3; Addison-Wesley; Reading, Mass. (1981) beschrieben ist. Unglücklicherweise erlaubt die lineare Natur dieser Pseudozufallssequencen, die durch einen solchen Pseudozufallsgenerator erzeugt werden, die Bestimmung des Inhalts des Schieberegisters anhand von einer geringen Anzahl von Generatorausgangswerten. Die Verwendung von nicht linearen Mischoperationen macht die Folgen unempfindlicher gegenüber Umkehrung und macht die Vorhersage des Verhaltens des Systems schwierig oder gar unmöglich.

Das cryptographische Modul 30 kann mit Hilfe eines verallgemeinerten Rotorsystems ausgeführt werden. Solch ein System ist für parallele Verarbeitung gut geeignet und kann die grundsätzlichen cryptographischen Operationen ausführen. Die Schieberegister, die zur Erzeugung der Rotorwahl und des Rotorversatzes verwendbar sind, können parallel arbeiten und ihre Ausgangswerte in Verzögerungsleitungen von variabler Länge speisen, so daß jedes Zeichen mit dem geeigneten Rotorwert verschlüsselt wird. Während jede Rotorstufe sequentiell arbeitet, verarbeiten alle Stufen zusammen gesehen die Daten parallel mit dem Ergebnis eines hohen Durchsatzes.

Andererseits kann das cryptographische Modul 30 mit anderen geeigneten cryptographischen Verfahren realisiert werden, die den gewünschten Grad von Sicherheit gewährleisten. Sehr sichere cryptographische Blocktransformationen sind nicht lineare Transformationen, bei denen jedes Bit am Ausgang von jedem Bit am Eingang und vom cryptographischen Schlüssel abhängt. Ein Wechsel von irgendeinem Bit im Schlüssel oder im Eingangsblock gibt bei jedem Bit im Ausgangsblock unabhängig voneinander ungefähr eine 50%ige Änderungswahrscheinlichkeit bei nicht vorhersagbarem Muster in den Änderungen. Ein Beispiel einer solchen Mischoperation ist das US Regierungs Data Encryption Standard (DES), das nunmehr auf integrierten Schaltkreisen zur Verfügung steht. Wenn die hohe Geschwindigkeit der verallgemeinerten Rotoren nicht erforderlich ist und das Standard Encryption Verfahren gewünscht wird, bringt ein cryptographisches Modul, das auf DES basiert, eine hohe Sicherheit.

Da der Umfang des Systemschlüssels klein ist bei einem typischen DES Prozessorchip, wird eine mehrmalige Verschlüsselung empfohlen, um die cryptographische Sicherheit gegenüber hartnäckigen Angriffen zu erhöhen. Dies erfordert eine mehrmalige Verarbeitung des Klartextes über getrennte DES Prozessoren (von denen jeder seinen eigenen Schlüssel hat). In diesem Falle bleiben die Schlüssel für die Transformationen konstant für jeden zu verarbeitenden Textblock. Es ist jedoch vorteilhaft, ein System zu verwenden, das einen größeren Schlüsselumfang ermöglicht. Weiterhin würde die Sicherheit weiter erhöht, wenn der benutzte Schlüssel während des Verschlüsselungsvorganges geändert würde, da es dann einem Unberechtigten nicht möglich wäre, Lösungen, die bei einem Textblock gefunden worden sind, an einem anderen Textblock zu testen.

Diese Erfordernisse werden bei einem "duplex" nach dem DES-Verfahren arbeitenden System erfüllt. Die einfachste Version dieses Systems ist eine doppelte DES-Anordnung, bei dem ein DES-Schlüsselgenerator DES1, der aus einem mit einem Schlüssel K1 und einem Starttextblock geladenen DES-Chip besteht, verwendet wird, um die Schlüssel K2 für einen zweiten DES-Verschlüsselungschip zu erzeugen, sowie es in Fig. 6 gezeigt ist. Dieser Schlüsselgenerator führt aufeinanderfolgende Transformationen des Textblockes unter Verwendung des festen Schlüssels durch. Der Ausgang des Schlüsselgenerators wird auf Parität eingestellt und als Schlüssel für den zweiten DES-Chip DES2 verwendet. Der Schlüssel für dieses System setzt sich zusammen aus dem Schlüssel und dem Starttextblock der Schlüsselgeneratoreinheit. Eine solche Anordnung arbeitet analog einem Pseudozufallszahlengenerator, der das lineare Kongruenzverfahren verwendet.

Der Schlüsselgenerator erzeugt einen langperiodischen Zyklus von Ausgangsblöcken. Ein Zyklus ist vollendet, sobald ein früherer Wert wiederholt wird. Da die DES-Abbildung offenbar zufällig ist und auf einen einzigen Bitwechsel am Eingang reagiert, ist die Durchschnittsperiode auf einer statistischen Basis schätzbar. Da es 2⁶⁴ mögliche Blöcke gibt und im Durchschnitt jeder gleich wahrscheinlich ist, ist die erwartete Periode des Schlüsselgenerators 2⁶³ Blöcke. Ein bekannter Klartextangriff auf diese System wird die folgenden Schlüssel, die von dem Verschlüsselungschip verwendet werden, beeinflussen. Diese Schlüssel setzen sich zusammen aus 56 Bits des 64 bit Ausgangsblocks des Schlüsselgenerators. Da es bekannt ist, daß der Transformationsschlüssel konstant gehalten wird, muß der unberechtigte Angreifer feststellen, welcher Eingangsblock und welcher Transformationsschlüssel den bekannten Ausgangsblock ergibt. Die Ungewißheit in der Kenntnis des Ausgangsblockes um einen Faktor von 256 pro Block (abhängig von der Benutzung eines Bit pro Byte als Paritätsbit) erhöht die Schwierigkeiten des Unberechtigten. Die Ungewißheit in der Kenntnis des Ausgangs des Schlüsselgenerators erhöht den zu untersuchenden Spielraum auf 2¹²⁸ (2⁶⁴ in Abhängigkeit des Generatoreingangsblockes, 256 in Abhängigkeit des Generatorschlüssels, und 2⁸ in Abhängigkeit der Ungewißheit, die in der Kenntnis des Analytikers von dem Ausgangswert des Schlüsselgenerators begründet ist). Dieser Suchspielraum ist größer als der Suchspielraum bei der konventionellen doppelten DES-Verschlüsselungsmethode.

Die Systemsicherheit kann mit wenig Kosten bedeutend erhöht werden, wenn der Umfang des Eingangstextblockes erhöht wird und der Transformationsschlüssel zudem von dem Textblock ausgewählt wird. Dies ist der Fall bei einem Schieberegister, das nach dem Zufallsprinzip arbeitet. Solch ein Schieberegister besteht aus einem Speicherblock, der die Registerinhalte speichert, einem Prozessor, der die Rückkopplungsverbindungen und die Arbeit des DES-Chip steuert und aus einem DES-Chip, das als nicht lineares Rückkopplungselement dient. Der Ausgang des Schieberegisters wird als variabler Schlüssel für das zweite DES-Chip verwendet, das dann die Verschlüsselung durchführt. Der Speicher kann in Blöcken strukturiert sein, die als solche verwendet werden oder als Serien von Bits, von denen der Schlüssel und der Textblock ausgelesen wird.

Es sei angenommen, daß der Speicher k Blöcke enthält (jeder Block hat die Länge eines Blockcodes) mit Markierungen am i-ten und am j-ten Block. Die Rückkopplung wird durch die DES Transformation bestimmt (verschlüsselter Block = DES (Schlüssel, Klartextblock)). Das Schieberegister wird von seiner Rückkopplungsbeziehung gesteuert: Block (k) = DES (Block (k-i), Block (k-j)). Eine solche Anordnung ist in Fig. 7 gezeigt. Die Inhalte des Blocks (O) bis Block (k-l) bestimmen den Systemschlüssel. Bei diesem Verfahren werden aufeinanderfolgend höhere Werte von k verwendet. Das Verfahren ist leicht in hardware oder in software zu realisieren; es ergibt ein fortwährendes Ändern der Werte des "Schlüssels" und "Daten" Blöcke, die transformiert werden. Nachdem das Verfahren mehrere Male durch die Speicheranordnung hindurchgelaufen ist, ist jedes Bit in dem Block abhängig von dem Wert jedes Bits des anfänglichen Inhalts des Speichers.

Es wird angenommen, daß die Blöcke p bits lang sind und daß die Schlüssel eine Menge/Untermenge des Blockes mit einer Länge von q bit sind, wobei q < = p ist. Da cryptographische Blocktransformationen umkehrbar und einzigartig sind, kann jeder Eigangsblock in 2^{q} verschiedene Ausgangsblöcke abgebildet werden (als Ergebnis der 2^{q} Schlüssel). Die Wahrscheinlichkeit, daß ein gegebener Eingangsblock in einen bestimmten Ausgangsblock abgebildet wird, ist 2^{q-p}. Die Wahrscheinlichkeit einer bestimmten Abbildung ist 2^{-q}. Die Wahrscheinlichkeit, daß ein bestimmter Ausgangsblock bei zufällig gewähltem Eingangsblock und zufällig gewähltem Schlüssel erhalten wird, ist 2^{-p}.

Bei der wiederholten Verwendung des Schieberegisters SHR wird jeder Block zweifach verwendet: Einmal als Eingangsblock und einmal als Schlüssel, da q bits verwendet werden. Das Schieberegister wiederholt sich selbst nur dann, wenn alle Blöcke in dem Schieberegister dieselben sind, die früher schon einmal aufgetreten sind. Da die Wahrscheinlichkeit für das Auftreten eines gegebenen Ausgangsblockes 2^{-p} ist, ist die Wahrscheinlichkeit für n aufeinanderfolgende besondere Blöcke 2^{-np}. Dies ergibt eine erwartete Periodenlänge von 2^{np} Blöcken = 2^{(n+1)p} bits, also etwas länger als die Periode eines linearen Rückkopplungsschieberegisters maximaler Länge mit np bits (=2^{np}-1).

Die Komplexität wird weiter erhöht, wenn der Schlüssel und der zu transformierende Block bitweise aus dem Speicherblock ausgelesen wird. In diesen Fall würde der steuernde Mikroprozessor eine geeignete Zahl von bits für den Schlüssel und Transformationsblock von geeigneten Stellen in dem Register lesen. Wenn die Registerlänge so gewählt wird, daß sie im Vergleich zu den Längen des Schlüssels und des Blockes ungefähr eine Primzahl darstellt, wird die Analyse wegen der sich ständig ändernden Stellen des Schlüssels und des Datenblockes innerhalb des Registers schwieriger. Ein solches Verfahren erhöht die Periode um das Produkt der Längen des Registers, des Schlüsselblockes und des Transformationsblockes (wobei gemeinsame Faktoren nur einmal erscheinen).

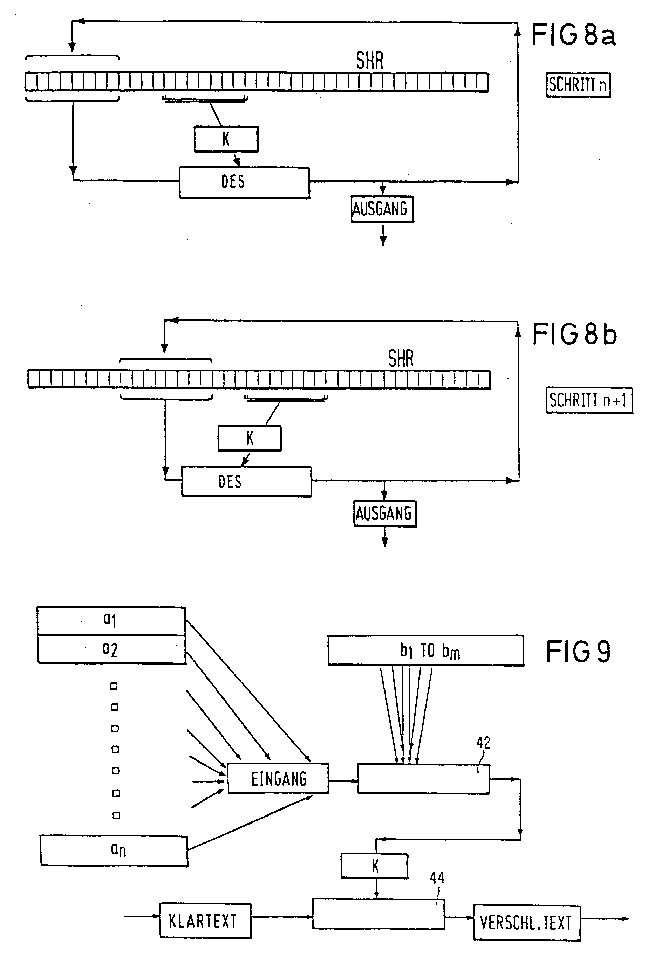

Es sei die Schlüssellänge des DES 7 Bytes, während die Blocklänge 8 Bytes ist. Da die Länge des Schieberegisters so gewählt ist, daß sie ungefähr eine Primzahl im Verhältnis zur Länge des Schlüssels (7 Bytes) und des Blockes (8 Bytes) darstellt und da nach jeder Operation des DES Chips der Schlüssel und der Textblock um ihre Länge verändert wird, wird die Rückkopplung innerhalb des Schieberegisters sehr viel komplexer und schwieriger zu analysieren. Eine entsprechende schematische Anordnung ist in den Fig. 8a und 8b gezeigt.

Die Umkehrung des Ausganges eines solchen Schieberegisters wird wegen der Vielzahl der möglichen Abbildungen, die für jeden Ausgangsblock der Folge verfügbar sind, wegen der komplexen Mischungen, die innerhalb des Schieberegisters entstehen, schwierig sein.

Nach dem Zufallsprinzip arbeitende Schieberegister werden ausgezeichnete Generatoren für Pseudozufallszahlen Folgen sein. Diese Folgen können direkt, Byte um Byte, für fortwährende Verschlüsselung durch Moduloaddition oder Exklusiv-ODER Verknüpfung verwendet werden. Sie können ebenfalls Block um Block verwendet werden, um einen fortwährend sich ändernden Schlüsselstrom zu einem anderen DES Chip zu liefern, der den Klartext verarbeitet. Da beide Chips parallel arbeiten würden, würde die Verschlüsselungsgeschwindigkeit nicht verringert werden, jedoch würde die Sicherheit des Systems bedeutend ansteigen. Ein unberechtigter Angreifer würde zu Rückwärtsarbeit gezwungen sein, indem er die folgenden Schlüssel zum Verschlüsselungschip feststellt und ausgehend von diesen Schlüsseln versucht, die Inhalte des Schieberegisters festzustellen, -eine sehr schwierige Aufgabe.

Während nach dem Zufallsprinzip arbeitende Schieberegister nicht von der hardwaremäßigen Realisierung der cryptographischen Transformationen abhängig sind, werden hohe Verschlüsselungs- und Entschlüsselungsverarbeitungsgeschwindigkeiten eine Hardwarerealisierung der Mischoperationen erfordern. Das DES-System, das kommerziell erhältlich ist, ist nicht die einzige Mischtransformation, die verwendet werden kann. Das verallgemeinerte Rotorsystem ist ebenfalls für ein nach dem Zufallsprinzip arbeitende Schieberegisterkonstruktion als ein Byte- oder als ein Blockoperator geeignet. Es ist ebenfalls für Hochgeschwindigkeitshardware-Realisierungen geeignet.

Es ist möglich, beliebige Kombinationen von solchen Schieberegistern zu konstruieren, wobei Blockmischchips als nicht lineare algebraische Elemente verwendet werden. Die Verfügbarkeit von DES-Chips und deren einfache parallele Verdrahtung erlaubt die Konstruktion von komplexen cryptographischen Systemen, die sowohl schnell als auch schwierig zu analysieren sind. Allerdings macht die Komplexität der Blockvermischungstransformation, die bei der Konstruktion dieser Systeme verwendet wird, die Vorhersage ihres Verhaltens beinahe unmöglich. Wenn Systeme verwendet werden müssen, die theoretisch geplant werden können, könnten lineare Rückkopplungsschieberegister mit solchen Blocktransformationen gemischt werden, um eine Rückwärtsanalyse der Schieberegisterinhalte zu verhindern, wobei Vorteil aus der nicht Einzigartigkeit der Mischung gezogen wird, wenn sowohl der Schlüssel als auch der Block gemischt wird. Ein solcher Mischer ist in Fig. 9 dargestellt.

In der Anordnung der Fig. 9 mischt der erste DES-Chip 42, der den Schlüssel für den zweiten DES-Chip 44 erzeugt, die Inhalte der Schieberegister Al bis An und der Schieberegister Bl bis Bn. Es ist verständlich, daß die Inhalte dieser Register aufeinanderfolgend oder in willkürlicher Reihenfolge geliefert werden.

## Patentansprüche

1. Verfahren zur Sicherung der Übertragung von Daten zwischen einer Sicherungseinheit, die einem entfernt aufgestellten Terminal zugeordnet ist, und einer Rechenanlage, **gekennzeichnet** durch folgende Schritte:
a) die Rechenanlage wird von einem örtlichen Telefon angerufen, um Zugriff anzufordern;
b) über die Telefonleitung wird übertragen:
b1) in Klartext eine erste Nachricht, die die Identifikationsnummer der Sicherungseinheit enthält;
b2) verschlüsselt eine zweite Nachricht, bestehend aus einer persönlichen Identifikationszeichenkette, die von dem Terminalbenutzer in das Terminal eingegeben wird, aus einem ersten internen Kennwort, das automatisch von der Sicherungseinheit erzeugt wird, und aus der Telefonnummer des rufenden Telefons;
c) es wird auf eine Telefonrückrufnachricht von der Rechenanlage gewartet und falls diese eintrifft
d) über die Telefonleitung übertragen
d1) eine dritte Nachricht, die den Rückruf quittiert und
d2) eine verschlüsselte vierte Nachricht, die die Daten enthält.

2. Verfahren nach Anspruch 1, dadurch **gekennzeichnet,** daß die Identifikationsnummer der Sicherungseinheit (12) ständig in der Sicherungseinheit gespeichert wird.

3. Verfahren nach Anspruch 1, dadurch **gekennzeichnet,** daß die Identifikationsnummer in der Sicherungseinheit (12) gespeichert wird und daß die Identifikationsnummer der Sicherungseinheit in Abhängigkeit eines Befehls von der Rechenanlage (14) geändert wird.

4. Verfahren nach einem der vorhergehenden Ansprüche, dadurch **gekennzeichnet,** daß die dritte Nachricht ein verschlüsseltes zweites internes Kennwort enthält, das automatisch von der Sicherungseinheit (12) erzeugt wird.

5. Verfahren nach einem der vorhergehenden Ansprüche, dadurch **gekennzeichnet,** daß die persönliche Identifikationszeichenkette die persönliche Identifikationsnummer des Benutzers enthält.

6. Verfahren nach einem der vorhergehenden Ansprüche, dadurch **gekennzeichnet,** daß die persönliche Identifikationszeichenkette Markierungsstellen enthält, die angeben, daß der Benutzer von einem unberechtigten Angreifer gefährdet wird und daß bei deren Vorliegen der Zugriff zu der Rechenanlage verhindert wird.

7. Verfahren nach einem der Ansprüche 4 bis 6, dadurch **gekennzeichnet,** daß das erste und darauf folgende zweite interne Kennwort aus einer Folge von gegebenen Kennworten ausgewählt wird, die der Rechenanlage (14) bekannt ist.

8. Verfahren nach Anspruch 7, dadurch **gekennzeichnet,** daß in der Folge der Kennworte weitergegangen wird, damit das nächste interne Kennwort in der Folge ausgewählt wird.

9. Verfahren nach Anspruch 8, dadurch **gekennzeichnet,** daß das nächste interne Kennwort in Abhängigkeit jeder Anforderung auf Zugriff zur Rechenanlage ausgewählt wird.

10. Verfahren nach Anspruch 8, dadurch **gekennzeichnet,** daß das nächste interne Kennwort in Abhängigkeit eines Befehls ausgewählt wird, der in der Rückrufnachricht von der Rechenanlage enthalten ist.

11. Verfahren nach Anspruch 8, dadurch **gekennzeichnet,** daß das nächste interne Kennwort in regelmäßigen Zeitintervallen ausgewählt wird und dieses Kennwort über die Telefonleitung zusammen mit einer verschlüsselten fünften Nachricht zur Bestätigung zur Rechenanlage übertragen wird.

12. Verfahren nach einem der vorhergehenden Ansprüche, dadurch **gekennzeichnet,** daß die zweiten, dritten und vierten Nachrichten unter Verwendung des Data Encryption Standard (DES) und eines DES Schlüssels verschlüsselt wird.

13. Verfahren nach Anspruch 12, dadurch **gekennzeichnet,** daß der DES-Schlüssel vom internen Kennwort abhängig ist.

14. Verfahren zur Verschlüsselung einer ersten Nachricht unter Verwendung des Data Encryption Standard (DES) Verfahrens und eines ersten veränderbaren Schlüssels nach einem der vorhergehenden Ansprüche **gekennzeichnet** durch folgende Schritte:
a) es wird ein zweiter Schlüssel ausgewählt;
b) es wird eine zweite Nachricht ausgewählt;
c) die zweite Nachricht wird unter Verwendung des Data Encryption Standard (DES) Verfahrens und des zweiten Schlüssels verschlüsselt, um die dritte Nachricht zu erzeugen;
d) der erste Schlüssel wird aus der dritten Nachricht gebildet;
e) die zweite Nachricht wird aus der dritten Nachricht gebildet;
f) die Schritte c), d) und e) werden wiederholt.

15. Verfahren nach Anspruch 14, dadurch **gekennzeichnet,** daß der zweite Schlüssel aus der dritten Nachricht ausgewählt wird.

16. Anordnung zur Sicherung der Übertragung von Daten zwischen einer Sicherungseinheit (12), die einem entfernt aufgestellten Terminal (10) zugeordnet ist, und einer Rechenanlage (14), dadurch **gekennzeichnet,** daß in der Sicherungseinheit enthalten sind:
a) Mittel, durch die die Rechenanlage (14) von einer örtlichen Telefonleitung aus angerufen wird, um Zugriff anzufordern;
b) Mittel, um über die Telefonleitung folgendes zu übertragen:
b1) in Klartext eine erste Nachricht, die eine Sicherungseinheitsidentifikationsnummer enthält;
b2) verschlüsselt eine zweite Nachricht bestehend aus einer persönlichen Identifikationszeichenkette, die von dem Benutzer des Terminals (10) in das Terminal eingegeben wird, aus einem ersten internen Kennwort und aus der Telefonnummer des rufenden Telefons;
c) Mittel, denen der Rückruf von der Rechenanlage zugeführt werden;
d) Mittel, die in Abhängigkeit des Rückrufes folgendes über die Telefonleitung übertragen:
d1) verschlüsselt eine dritte Nachricht, die ein zweites internes Kennwort enthält und
d2) verschlüsselt eine vierte Nachricht, die Daten enthält.

17. Anordnung nach Anspruch 16, dadurch **gekennzeichnet,** daß in der Sicherungseinheit (12) ein Speicher zur dauerhaften Speicherung der Identifikationsnummer der Sicherungseinheit enthalten ist.

18. Anordnung nach Anspruch 16, dadurch **gekennzeichnet,** daß in der Sicherungseinheit ein Speicher zur Speicherung der Identifikationsnummer der Sicherungseinheit enthalten ist und daß diese Identifikationsnummer in Abhängigkeit eines Befehls von der Rechenanlage änderbar ist.

19. Anordnung nach einem der Ansprüche 16 bis 18, dadurch **gekennzeichnet,** daß in der Sicherungseinheit Mittel vorgesehen sind, um das erste und zweite interne Kennwort aus einer vorgegebenen Folge von Kennworten auszuwählen, und daß diese Folge von Kennworten der Rechenanlage bekannt ist.

20. Anordnung nach Anspruch 19, dadurch **gekennzeichnet,** daß in der Sicherungseinheit Mittel enthalten sind, um von einem Kennwort in der Folge zu einem anderen Kennwort zu schalten und damit das nächste interne Kennwort auszuwählen.

21. Anordnung nach einem der Ansprüche 16 bis 20, dadurch **gekennzeichnet,** daß in der Sicherungseinheit (12) cryptographische Mittel enthalten sind, um die zweite, dritte und vierte Nachricht zu verschlüsseln.

22. Anordnung nach Anspruch 21, dadurch **gekennzeichnet,** daß die cryptographischen Mittel einen Data Encryption Standard (DES) Baustein enthalten, der unter Verwendung eines DES Schlüssels verschlüsselt.

23. Anordnung nach Anspruch 22, dadurch **gekennzeichnet,** daß dieser DES-Schlüssel vom internen Kennwort abhängig ist.

24. Anordnung nach Anspruch 23 zur Verschlüsselung der ersten Nachricht unter Verwendung des Data Encryption Standard (DES) Verfahrens und eines veränderbaren ersten Schlüssels **gekennzeichnet** durch folgende Merkmale:
a) ein erster DES-Schaltkreis ist vorgesehen, um die erste Nachricht unter Verwendung des ersten Schlüssels zu verschlüsseln, wobei eine zweite Nachricht erzeugt wird;
b) ein zweiter DES-Schaltkreis ist vorgesehen, um eine dritte Nachricht unter Verwendung eines zweiten Schlüssels zu verschlüsseln, wobei eine vierte Nachricht erzeugt;
c) es sind Mittel vorgesehen, denen die vierte Nachricht zugeführt wird, um den ersten Schlüssel in Abhängigkeit der vierten Nachricht zu erzeugen und
d) es sind Mittel vorgesehen, denen die vierte Nachricht zugeführt wird, um die dritte Nachricht in Abhängigkeit der vierten Nachricht zu erzeugen.

## Claims

1. Method for protecting the transmission of data between a protection unit which is assigned to a remote terminal and a computer system, characterised by the following steps:
a) the computer system is called up from a local telephone to request access;
b) the following are transmitted over the telephone line:
b1) a first message in plain language containing the identification number of the protection unit;
b2) a second message which is encrypted and comprises a personal identification string entered into the terminal by the terminal user, a first internal password automatically generated by the protection unit, and the telephone number of the calling telephone;
c) a telephone callback message from the computer system is awaited, and if this arrives
d) the following are transmitted over the telephone line:
d1) a third message acknowledging the callback and
d2) a fourth encrypted message containing the data.

2. Method according to Claim 1, characterised in that the identification number of the protection unit (12) is permanently stored in the protection unit.

3. Method according to Claim 1, characterised in that the identification number is stored in the protection unit (12), and in that the identification number of the protection unit is changed depending on a command from the computer system (14).

4. Method according to one of the preceding claims, characterised in that the third message contains an encrypted second internal password that is automatically generated by the protection unit (12).

5. Method according to one of the preceding claims, characterised in that the personal identification string contains the personal identification number of the user.

6. Method according to one of the preceding claims, characterised in that the personal identification string contains marking points which indicate that the user is at risk from an unauthorised attacker, and in that the access to the computer system will be prevented if they are present.

7. Method according to one of Claims 4 to 6, characterised in that the first and the following second internal password is selected from a series of given passwords which is known to the computer system (14).

8. Method according to Claim 7, characterised in that the series of passwords is stepped through to select the next internal password in the series.

9. Method according to Claim 8, characterised in that the next internal password is selected depending on each request for access to the computer system.

10. Method according to Claim 8, characterised in that the next internal password is selected depending on a command contained in the callback message from the computer system.

11. Method according to Claim 8, characterised in that the next internal password is selected at regular time intervals and said password is transmitted over the telephone line to the computer system together with an encrypted fifth message for acknowledgement.

12. Method according to one of the preceding claims, characterised in that the second, third and fourth messages are encrypted using the Data Encryption Standard (DES) and a DES key.

13. Method according to Claim 12, characterised in that the DES key is dependent on the internal password.

14. Method for encrypting a first message using the Data Encryption Standard (DES) method and a first variable key according to one of the preceding claims, characterised by the following steps:
a) a second key is selected;
b) a second message is selected;
c) the second message is encrypted using the Data Encryption Standard (DES) method and the second key to generate the third message;
d) the first key is formed from the third message;
e) the second message is formed from the third message;
f) the steps c), d) and e) are repeated.

15. Method according to Claim 14, characterised in that the second key is selected from the third message.

16. Arrangement for protecting the transmission of data between a protection unit (12) which is assigned to a remote terminal (10) and a computer system (14), characterised in that the protection unit contains:
a) means with which the computer system (14) is called up from a local telephone line to request access;
b) means for transmitting the following over the telephone line:
b1) a first message in plain language containing a protection unit identification number;
b2) a second message which is encrypted and comprises a personal identification string entered into the terminal (10) by the terminal user, a first internal password, and the telephone number of the calling telephone;
c) means to which the callback from the computer system is supplied;
d) means which transmit the following over the telephone line depending on the callback:
d1) a third message which is encrypted and contains a second internal password and
d2) a fourth message which is encrypted and contains the data.

17. Arrangement according to Claim 16, characterised in that the protection unit (12) contains a memory for the permanent storage of the identification number of the protection unit.

18. Arrangement according to Claim 16, characterised in that the protection unit contains a memory for storing the identification number of the protection unit, and in that said identification number can be changed depending on a command from the computer system.

19. Arrangement according to one of Claims 16 to 18, characterised in that means are provided in the protection unit to select the first and second internal passwords from a predetermined series of passwords, and in that said series of passwords is known to the computer.

20. Arrangement according to Claim 19, characterised in that the protection unit contains means for switching from one password in the series to another password in order thereby to select the next internal password.

21. Arrangement according to one of Claims 16 to 20, characterised in that the protection unit (12) contains cryptographic means for encrypting the second, third and fourth message.

22. Arrangement according to Claim 21, characterised in that the cryptographic means contains a Data Encryption Standard (DES) module which performs encryption using a DES key.

23. Arrangement according to Claim 22, characterised in that said DES key is dependent on the internal password.

24. Arrangement according to Claim 23 for encrypting the first message using the Data Encryption Standard (DES) method and a variable first key, characterised by the following features:
a) a first DES circuit is provided to encrypt the first message using the first key, a second message being thereby generated;
b) a second DES circuit is provided to encrypt a third message using a second key, a fourth message being thereby generated;
c) means are provided to which the fourth message is supplied in order to generate the first key depending on the fourth message and
d) means are provided to which the fourth message is supplied in order to generate the third message depending on the fourth message.

## Revendications

1. Procédé pour protéger la transmission de données entre une unité de protection, qui est associée à un terminal éloigné, et une installation de calcul, caractérisé par les étapes suivantes :
a) l'installation de calcul est appelée par un téléphone local pour la demande d'un accès;
b) par l'intermédiaire de la ligne téléphonique sont transmises :
b1) en texte clair, une première information qui contient le numéro d'identification de l'unité de protection;
b2) sous forme codée, une seconde information constituée par une suite personnelle de caractères d'identification, qui est introduite par l'utilisateur du terminal dans ce dernier, par un premier mot caractéristique interne, qui est produit automatiquement par l'unité de protection, et par le numéro du téléphone avec lequel s'effectue l'appel;
c) l'installation de calcul attend une information de retour téléphonique et, dans le cas où celle-ci arrive
d) par l'intermédiaire de la ligne téléphonique sont transmises
d1) une troisième information, qui accuse réception du retour, et
d2) une quatrième information codée, qui contient les données.

2. Procédé suivant la revendication 1, caractérisé par le fait que le numéro d'identification de l'unité de protection (12) est mémorisé en permanence dans cette unité de protection.

3. Procédé suivant la revendication 1, caractérisé par le fait que le numéro d'identification est mémorisé dans l'unité de protection (12) et que le numéro d'identification de l'unité de protection est modifié en fonction d'une instruction provenant de l'installation de calcul (14).

4. Procédé suivant l'une des revendications précédentes, caractérisé par le fait que la troisième information contient un second mot caractéristique interne codé, qui est produit automatiquement par l'unité de protection (12).

5. Procédé suivant l'une des revendications précédentes, caractérisé par le fait que la suite personnelle de caractères d'identification contient le numéro personnel d'identification de l'utilisateur.

6. Procédé suivant l'une des revendications précédentes, caractérisé par le fait que la suite personnelle de caractères d'identification contient des zones de marquage, qui indiquent que l'utilisateur est soumis à un risque de la part d'une personne non autorisée cherchant à obtenir un accès et que dans le cas de la présence de ces zones de marquage, l'accès à l'installation de calcul est empêché.

7. Procédé suivant l'une des revendications 4 à 6, caractérisé par le fait que le premier mot caractéristique interne et le second mot caractéristique interne, qui lui succède, sont choisis à partir d'une suite de mots caractéristiques donnés, qui est connue de l'installation de calcul (14).

8. Procédé suivant la revendication 7, caractérisé par le fait qu'une progression est effectuée dans la suite des mots caractéristiques afin que le mot caractéristique interne immédiatement suivant de la suite soit sélectionné.

9. Procédé suivant la revendication 8, caractérisé par le fait que le mot caractéristique interne immédiatement suivant est sélectionné en fonction de chaque demande d'accès à l'installation de calcul.

10. Procédé suivant la revendication 8, caractérisé par le fait que le mot caractéristique interne immédiatement suivant est sélectionné en fonction d'une instruction qui est contenue dans l'information de rappel délivrée par l'information de calcul.

11. Procédé suivant la revendication 8, caractérisé par le fait que le mot caractéristique interne immédiatement suivant est sélectionné dans des intervalles de temps réguliers et que ce mot caractéristique est transmis par l'intermédiaire de la ligne téléphonique conjointement avec une cinquième information codée pour donner confirmation à l'installation de calcul.

12. Procédé suivant l'une des revendications précédentes, caractérisé par le fait que les seconde, troisième et quatrième informations sont codées moyennant l'utilisation du Data Encryption Standard (DES) et d'un code DES.

13. Procédé suivant la revendication 12, caractérisé par le fait que le code DES dépend du mot caractéristique interne.

14. Procédé pour coder une première information en utilisant le procédé Data Encryption Standard (DES) et un premier code variable, suivant l'une des revendications précédentes, caractérisé par les étapes suivantes :
a) un second code est sélectionné;
b) une seconde information est sélectionnée;
c) la seconde information est codée moyennant l'utilisation du procédé Data Encryption Standard (DES) et du second code pour produire la troisième information;
d) le premier code est formé à partir de la troisième information;
e) la seconde information est formée à partir de la troisième information;
f) les étapes c) et d) et e) sont répétées.

15. Procédé selon la revendication 14, caractérisé par le fait que le second code est sélectionné à partir de la troisième information.

16. Dispositif pour protéger la transmission de données entre une unité de sécurité (12), qui est associée à un terminal éloigné (10), et une installation de calcul (14), caractérisé par le fait que l'unité de protection comporte :
a) des moyens permettant à l'installation de calcul (14) d'être appelées à partir d'une ligne téléphonique urbaine pour la demande d'un accès;
b) des moyens pour transmettre ce qui suit par l'intermédiaire de la ligne téléphonique :
b1) en texte clair, une première information qui contient un numéro d'identification de l'unité de protection;
b2) de façon codée, une seconde information constituée par une suite personnelle de caractères d'identification, qui est introduite par l'utilisateur du terminal (10) dans ce dernier, par un premier mot caractéristique interne et par le numéro du téléphone au niveau duquel s'effectue l'appel;
c) des moyens, auxquels le rappel est envoyé par l'installation de calcul;
d) des moyens qui transmettent ce qui suit en fonction du rappel, par l'intermédiaire de la ligne téléphonique :
d1) de façon codée, une troisième information qui contient un second mot caractéristique interne, et
d2) de façon codée, une quatrième information qui contient des données.

17. Dispositif suivant la revendication 16, caractérisé par le fait que l'unité de protection (12) comporte une mémoire servant à mémoriser de façon durable le numéro d'identification de l'unité de protection.

18. Dispositif suivant la revendication 16, caractérisé par le fait que l'unité de protection comporte une mémoire servant à mémoriser le numéro d'identification de l'unité de protection et que ce numéro d'identification peut être modifié en fonction d'une instruction délivrée par l'installation de calcul.

19. Dispositif suivant l'une des revendications 16 à 18, caractérisé par le fait que dans l'unité de protection il est prévu des moyens servant à sélectionner des premier et second mots caractéristiques internes à partir d'une suite prédéterminée de mots caractéristiques, et que cette suite de mots caractéristiques est connue de l'installation de calcul.

20. Dispositif suivant la revendication 19, caractérisé par le fait que l'unité de protection comporte des moyens permettant de passer d'un mot caractéristique de la suite à un autre mot caractéristique et de sélectionner par conséquent le mot caractéristique interne immédiatement suivant.

21. Dispositif suivant l'une des revendications 16 à 20, caractérisé par le fait que l'unité de protection (12) comporte des moyens cryptographiques permettant de coder les seconde, troisième et quatrième informations.

22. Dispositif suivant la revendication 21, caractérisé par le fait que les moyens cryptographiques comportent un module Data Encryption Standard (DES), qui réalise le codage en utilisant un code DES.

23. Dispositif suivant la revendication 22, caractérisé par le fait que ce code DES dépend du mot caractéristique interne.

24. Dispositif suivant la revendication 23 pour coder la première information en utilisant le procédé Data Encryption Standard (DES) et un premier code variable, caractérisé par les particularités suivantes :
a) il est prévu un premier circuit DES servant à coder la première information en utilisant le premier code, ce qui permet d'obtenir une seconde information;
b) il est prévu un second circuit DES qui sert à coder une troisième information moyennant l'utilisation d'un second code, ce qui permet d'obtenir une quatrième information;
c) il est prévu des moyens, auxquels la quatrième information est envoyée pour produire le premier code en fonction de la quatrième information; et
d) il est prévu des moyens auxquels la quatrième information est envoyée pour produire la troisième information en fonction de la quatrième information.
